# EUROPÄISCHE PATENTSCHRIFT

(11) **EP 1 137 109 B1**
(45) Veröffentlichungstag und Bekanntmachung des Hinweises auf die Patenterteilung: **03.11.2004**
(21) Anmeldenummer: 01103036.8
(22) Anmeldetag: 09.02.2001
(51) Int. Cl.: H01R 13/44, H01R 13/453, B64D 11/00

(54) **Schutzsteckdose mit Sicherheitsvorrichtung für Flugzeuge**
Protection socket including security device for aircrafts
Prise de courant avec dispositif de sécurité pour avions

(30) Priorität: 23.03.2000 DE 10014500
(43) Veröffentlichungstag der Anmeldung: 26.09.2001
(73) Patentinhaber: KID-Systeme GmbH, 21614 Buxtehude (DE)
(72) Erfinder: Mosebach, Dieter, 21720 Mittelnkirchen (DE); Brey, Jens, 21683 Stade-Bützfleth (DE); Krick, Hans-Jürgen, 22043 Hamburg (DE)
(74) Vertreter: Hansmann, Dierk, Dipl.-Ing.

(56) Entgegenhaltungen:
- EP-A- 0 539 093
- EP-A- 0 646 990
- EP-A- 0 763 875
- DE-U- 9 211 368
- GB-A- 812 890

## Beschreibung

Die Erfindung betrifft eine in einem Flugzeug angeordnete elektrische Schutzsteckdose mit Sicherheitsvorrichtung zum Anschluß von elektronischen Geräten mittels handelsüblicher Stecker und Stromkabel, insbesondere von transportierbaren elektronischen Geräten wie z.B. Laptops oder Walkmans, wobei die Steckdose vorzugsweise in der Nähe eines Passagiersitzes befestigt ist, wobei innerhalb eines Gehäuses der Steckdose ein die Öffnungen von Steckerbuchsen abdeckendes, eine direkte Einführung von Stiften eines Steckers verhinderndes Verschlußelement angeordnet ist, welches senkrecht zur Achse der Steckdose in mindestens eine Richtung verschiebbar angeordnet ist, wobei innerhalb des Gehäuses ein Biegeriegelelement mit einer Sperrklinke vorgesehen ist, deren Sperrklinke in ihrer Verriegelungsstellung in ein am Verschlußelement angeordnetes Rasterelement eingreift und in dieser Stellung durch eine Druckfeder gehalten wird, wobei ein in die Steckdosenöffnung eingebrachter Adapter mit einem senkrecht angeordneten Entriegelungsstift vorgesehen ist, und wobei der Entriegelungsstift die Verriegelungsstellung des Verschlußelementes aufhebt und ermöglicht, daß bei Einführung eines Steckers in die Steckdosenöffnung die Stifte des Steckers zwei im Abstand der Stifte im Adapter vorgesehene Bohrungen durchdringen, eine seitliche Verschiebung des Verschlußelementes bewirken und in die Steckerbuchsen zwecks elektrischer Kontaktnahme eingreifen.

Durch die immer größere Verbreitung von transportablen elektronischen Geräten ist ein Bedarf entstanden, diese Geräte auch in einem Flugzeug während des Flugbetriebes zu betreiben. Da die Batterie- bzw. Akku-Kapazität solcher Geräte für längere Flugzeiten nicht ausreicht, werden Steckdosen in/am Passagiersitzplatz verlangt, um diese Geräte betreiben zu können. Allerdings darf im Flugzeug aus EMV-Geräten nicht jedes beliebige Gerät betrieben werden. Um hierauf Einfluß nehmen zu können, reglementieren Vorschriften die Art der verwendbaren Steckdosen. So ist eine Steckdose gefordert, zu welcher handelsübliche Stecker nicht passen, so daß ein spezieller Adapter erforderlich wird. Ein derartiger Adapter hat folgende Aufgaben zu erfüllen:
- Anschlußmöglichkeit an eine Hypertronic-Steckdose mit einer 15 V-DC-Ausgangsspannung,
- die für einen Laptop benötigte Spannung aus der zur Verfügung gestellten 15 V-DC-Spannung abzuleiten, und
- für die Laptop spezifische Steckdose den Stecker bereitzustellen.

Nachteilig ist, daß - bedingt durch die schnellen Modellwechsel, z.B. bei Laptops - ständig neue Adapter für Flugzeuganwendungen erforderlich sind. Die Verfügbarkeit ist daher nicht immer gewährleistet. Von Nachteil ist auch, daß die Adapter nicht von den Laptop-Herstellern geliefert werden, so daß die Kompatibilität zwischen Laptop und Flugzeuganwendung nicht immer sichergestellt ist.

Es sind eine Reihe von unterschiedlichen Steckdosenvarianten bekannt geworden. So ist in der GB 612 486 eine elektrische Steckdose beschrieben, die ein ihre elektrischen Kontakte abdeckendes Schutzmittel in Form von zwei flachen Isolierplatten aufweist. Diese Isolierplatten werden durch eine Druckfeder in ihrer Ruhestellung gehalten, wobei die Druckfeder mit jeweils einem den Isolierplatten zugeordneten Anschlag zusammenwirkt. Die Herstellung einer Verbindung zwischen den stromführenden Kontakten der Steckdose und eines in die Steckdose einzuführenden Steckers wird dadurch ermöglicht, daß zunächst der Erdungskontakt des Steckers die bei den Isolierplatten entgegen der Federkraft in eine Entriegelungsposition bewegt. Anschließend werden bei der Einführung des Steckers in die Steckdose die Isolierplatten durch die Steckerstifte in eine die Kontakte der Steckdose freigebende Position bewegt.

Weiterhin ist aus der EP-A-0 539 093 A eine elektrische Steckdose mit zwei Kontakten zur Verbindung mit Stiftkontakten eines Steckers ersichtlich. Die Steckdose weist eine Verschlußblende auf, die in Verriegelungsstellung zwei in einer vorderen Steckdosenwandung angeordnete Steckeröffnungen abdeckt. Eine Entriegelung der Verschlußblende wird durch Einführung eines Erdkontaktes oder Verwölbungsstiftes erreicht. Nach ihrer Entriegelung läßt sich die Verschlußblende durch Einwirkung der Steckerstifte des in die Steckdose eingebrachten Steckers von den Steckeröffnungen derart weg bewegen, daß die Stifte des Steckers in die Buchsen der Steckdose zwecks Herstellung der vorgesehenen elektrischen Verbindung eingeführt werden können.

Aus der DE-U-92 11 368 ist eine Schutzkontaktsteckkupplung bekannt, bestehend aus einem Stecker und einem mit einer Kappe verschließbaren Gehäuse. In dem Gehäuse sind an einem Grundkörper aus elektrischem Isolierstoff außer Schutzkontakten zwei Kontakthülsen zur Aufnahme von Kontaktstiften eines profilierten Steckers gehalten. Der Stecker ist in eine geformte Vertiefung der Kappe einsetzbar. Zwischen dem Boden der Vertiefung, der mit Bohrungen zum Hindurchführen der Kontaktstifte versehen ist, und den freien Enden der Kontakthülsen ist ein im wesentlichen T-förmiges Sperrelement drehbar angeordnet und in eine Sperrstellung federnd vorgespannt. Der Flansch des Sperrelementes ragt in den Raum zwischen den Bohrungen im Boden der Vertiefung und den freien Enden der Kontakthülsen, wobei am Stecker ein Entriegelungsstift angebracht ist. Dieser Stift wirkt beim Einschieben des Steckers in die Vertiefung durch eine Entriegelungsbohrung in deren Boden hindurch auf eine Stellfläche am Steg des Sperrelementes ein. Hierdurch wird das Sperrelement gegen die vorgespannten Kräfte verstellt und dessen Flansch gibt den Raum zwischen dem Boden der Vertiefung und den freien Enden der Kontakthülsen frei, so daß die Kontaktstifte in die Kontakthülsen einsteckbar sind.

Weiterhin ist in der EP-A-0 763 875 das als nächstliegender Stand der Technick angesehen wird, eine aus Stecker und Steckerdose bestehende elektrische Steckverbindung beschrieben. Die Öffnungen der Steckerbuchsen sind durch ein im Gehäuse der Steckdose verschiebbar angeordnetes flächenförmiges Verschlußelement abgedeckt. Eine Freigabe dieser Öffnungen zwecks Einführung der Stiftkontakte des Steckers in die Steckerbuchsen wird mittels eines auf den Stecker aufsteckbaren Adapters erzielt. Der Adapter weist hierzu einen Entriegelungsstift auf, der beim Einbringen des Steckers in die Steckdose mit dem verschiebbaren Verschlußelement zusammenwirkt und eine Verschiebung des Verschlußelementes und damit Freigabe der Öffnungen der Steckbuchsen bewirkt. Dadurch wird die Herstellung der elektrischen Kontakte zwischen den Stiften des Steckers und den Steckerbuchsen der Steckdose ermöglicht.

Auch ist aus der EP-A-0 646 990 eine elektrische Steckdose ersichtlich, die wesentliche Merkmale der in der Beschreibungseinleitung beschriebenen Schutzsteckdose aufweist. So ist auch hier ein die Öffnungen von Steckerbuchsen abdeckendes Verschlußelement vorgesehen, welches bei Einführung eines Steckers in die Steckdosenöffnung senkrecht zur Achse der Steckdose in eine vorgegebene Richtung verschiebbar ist. Hierbei wird die seitliche Verschiebung des Verschlußelementes nach seiner Entriegelung mittels eines Adapters durch die Stifte des Steckers entgegen der Federkraft einer Druckfeder bewirkt. Der Adapter, der das Verschlußelement mit Hilfe von zwei in das Steckergehäuse eindringenden Stiften entriegelt, ist dem jeweils benutzten Stecker zugeordnet. Dieses bedeutet nachteiligerweise, daß der Adapter jeweils vor Herstellung einer Steckverbindung auf den jeweiligen Stecker aufgebracht und auf diesem genau positioniert werden muß, damit die Entriegelungsstifte in das Gehäuse des Steckers zwecks Entriegelung des Verschlußelementes eingeführt werden können.

Der Erfindung liegt nun die Aufgabe zugrunde, eine Schutzsteckdose mit einer Sicherheitsvorrichtung der eingangs genannten Art zu schaffen, bei der der Anschluß eines elektronischen Gerätes mittels des vom Hersteller vorgeschriebenen und mitgelieferten Stromkabels über den zugehörenden Stecker jederzeit ohne besondere umständliche Maßnahmen ermöglicht wird.

Die Aufgabe wird erfindungsgemäß dadurch gelöst, daß das Verschlußelement aus einem länglichen Führungsteil mit zwei längsseitlich angeordneten die Schrägflächen aufweisenden Bauteilen besteht, daß das längliche Führungsteil in einer nutförmigen Ausnehmung des Gehäuseblocks verschiebbar gelagert ist und eine Ausnehmung zur Aufnahme der Sperrklinke des Biegeriegelelementes aufweist, daß das Biegeriegelelement mittels eines Verbindungssteges mit einer Haltevorrichtung mechanisch fest verbunden ist, die in eine parallel zur Achse der Steckdose verlaufende, im Gehäuseblock angeordnete Nut einpaßbar ist, und daß bei Anlage des Adapters an der Stirnfläche der Steckdosenöffnung der Entriegelungsstift mit seinem in das Steckdosengehäuse eingreifenden Ende eine Druckkraft auf den Verbindungssteg des Biegeriegelelementes derart ausübt, daß eine Verschiebung des Verbindungssteges und der Sperrklinke in Achsrichtung der Steckdose sowie damit eine Entriegelung von Sperrklinke und Rasterelement bzw. Ausnehmung erfolgt.

Weitere erfindungsgemäße Ausgestaltungen sind in den Unteransprüchen 2 bis 5 beschrieben.

Vorteilhafterweise ist die Steckdose so konzipiert, daß kein Stecker in die Steckdose gesteckt werden kann, solange der Adapter sich nicht in der Steckdose befindet. Erst sobald der Adapter in die Steckdose eingeschoben ist, kann der Stecker in die Steckdose eingeschoben und somit eine elektrische Kontaktverbindung zwischen Stecker und Steckdose hergestellt werden. Der Adapter ist der Steckdose zugeordnet, so daß eine elektrische Verbindung zwischen Stecker und Steckdose jederzeit hergestellt werden kann, ohne daß der Adapter durch einen zusätzlichen Arbeitsvorgang auf dem entsprechenden Stecker positioniert werden muß.

In der Zeichnung ist ein Ausführungsbeispiel nach der Erfindung dargestellt. Es zeigen:
- Fig. 1: eine an einem Flugzeugsitz verwendbare Steckdose mit zugehörigem Stromversorgungskabel, und
- Fig. 2A bis 2B: eine Explosionsdarstellung der Bauteile einer Steckdose in dreidimensionaler Ansicht.

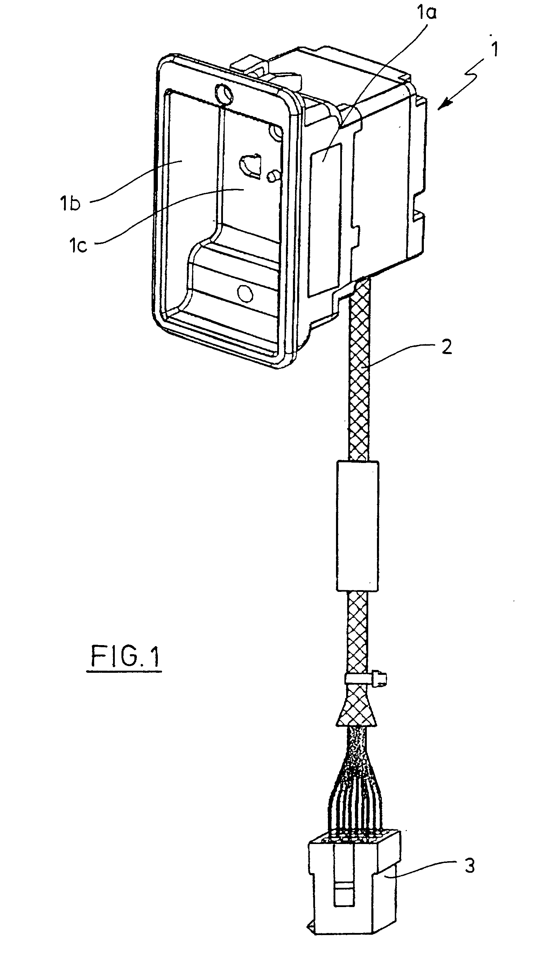

In Fig. 1 ist eine Steckdose 1, deren Gehäuse und deren Steckdosenöffnung mit 1a bzw. 1b bezeichnet sind, zum Anschluß eines zeichnerisch nicht dargestellten Steckers vorgesehen, der über ein Stromversorgungskabel mit einem eingangs genannten elektronisches Gerät in Verbindung steht. Zur Bereitstellung der elektrischen Leistung für dieses Gerät ist die Steckdose, die sich vorzugsweise in unmittelbarer Nähe eines Passagiersitzes befindet, mittels eines Kabels 2 und eines Anschlußsteckers 3 an das Bordnetz eines Flugzeuges angeschlossen.

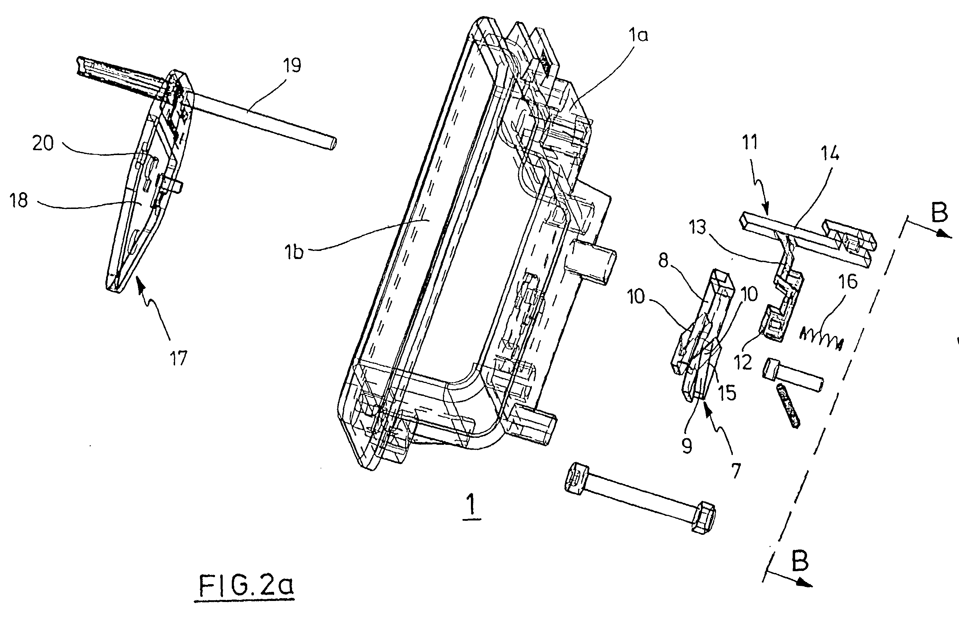

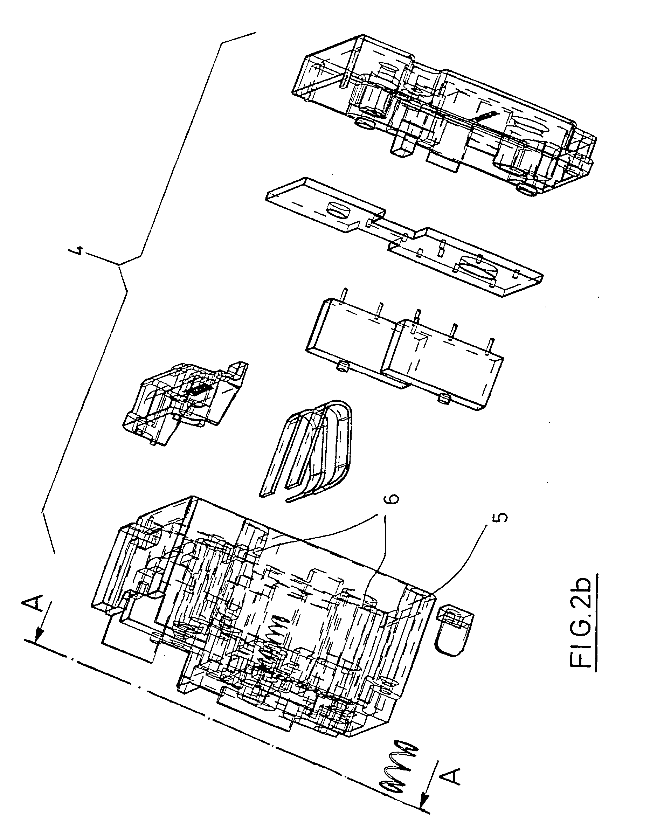

Wie aus Fig. 2A und 2B zu ersehen ist, nimmt das Steckdosengehäuse 1a im zusammengebauten Zustand einen Bauteileblock 4 auf der insbesondere die in einem Gehäuseblock 5 angeordneten Steckerbuchsen 6 sowie weitere nicht bezeichnete Steckdosenbauteile wie beispielsweise Klemm-, Feder- und Anschlußbauteile umfaßt. Vor den Öffnungen der Steckerbuchsen 6 ist ein Verschlußelement 7 angeordnet, welches beispielsweise scheibenförmig ausgebildet und auf seiner Oberfläche mit zwei Schrägflächen versehen sein kann. In dem dargestellten Beispiel besteht das Verschlußelement 7 aus einem länglichen Führungsteil 8 mit zwei längsseitlich angeordneten Bauteilen 9. Diese Bauteile weisen auf ihrer von den Steckerbuchsen 6 wegweisenden Oberfläche jeweils eine Schrägfläche 10 auf, die in einem Abstand, der dem Steckerbuchsenabstand entspricht, zueinander angeordnet sind. Das längliche Führungsteil 8 ist vorzugsweise in einer nutförmigen Ausnehmung des Gehäuseblocks 5 senkrecht zur Achse der Steckdose 1 in mindestens einer Richtung verschiebbar gelagert.

Innerhalb des Steckdosengehäuses 1a ist weiterhin ein Biegeriegelelement 11 angeordnet, welches mit einer Sperrklinke 12 versehen ist. Das Biegeriegelelement 11 ist mittels eines Verbindungssteges 13 mit einer Haltevorrichtung 14 mechanisch fest verbunden, die in eine parallel zur Achse der Steckdose 1 verlaufende, zeichnerisch nicht dargestellte Nut im Gehäuseblock 5 einpaßbar ist. Die Sperrklinke 12 greift in ihrer Verriegelungsstellung in ein am Verschlußelement 7 angeordnetes Rasterelement ein, vorzugsweise in eine Ausnehmung 15 des länglichen Führungsteiles 8. In der Verriegelungsstellung wird die Sperrklinke 12 durch eine Druckfeder 16 gehalten.

Gemäß Fig. 2 ist ein scheibenförmiger Adapter 17 mit einem senkrecht zu seiner Oberfläche 18 angeordneten Entriegelungsstift 19 vorgesehen, der in die Steckdosenöffnung 1b eingeschoben wird. Der Adapter 17 ist hierzu in seiner Form der Stirnfläche 1c der Steckdosenöffnung 1b angepaßt und liegt an dieser in seiner eingeschobenen Lage an. Der Entriegelungsstift 19 durchdringt eine in der Stirnfläche 1c vorgesehene Bohrung, greift in das Steckdosengehäuse 1a ein und wirkt zur Entriegelung der Sperrklinke 12 entgegen der Federkraft der Druckfeder 16 mit dem Biegeriegelelement 11 zusammen. Hierbei übt der Entriegelungsstift 19 mit seinem in das Steckdosengehäuse 1a eingreifenden Ende eine Druckkraft auf den Verbindungssteg 13 des Biegeriegelelementes 11 derart aus, daß eine Verschiebung des Verbindungssteges 13 und der Sperrklinke 12 in Achsrichtung der Steckdose 1 sowie damit eine Entriegelung von Sperrklinke 12 und Rasterelement bzw. Ausnehmung 15 erfolgt.

Bei Einführung eines Steckers in die Steckdosenöffnung 1b durchdringen die Stifte des Steckers zwei im Abstand der Stifte im Adapter 17 und in der Stirnfläche 1c der Steckdosenöffnung vorgesehene Bohrungen 20 und üben auf die Schrägflächen 10 des Verschlußelementes 7 eine Druckkraft derart aus, daß eine seitliche Verschiebung des Verschlußelementes 7 erfolgt. Somit ist ein Eingreifen der Steckerstifte in die Steckerbuchsen 6 zwecks elektrischer Kontaktnahme sichergestellt.

## Patentansprüche

1. Elektrische Schutzsteckdose (1) mit Sicherheitsvorrichtung für Flugzeuge zum Anschluß elektronischer Geräte mittels handelsüblicher Stecker und Stromkabel, insbesondere transportabler elektronischer Geräte, wie Laptops oder Walkmans, wobei die Steckdose (1) vorzugsweise in der Nähe eines Passagiersitzes befestigt ist, wobei innerhalb eines Gehäuses (1a) der Steckdose (1) ein die Öffnungen von Steckerbuchsen (6) abdeckendes, eine direkte Einführung von Stiften eines Steckers verhinderndes Verschlußelement (7) angeordnet ist, welches senkrecht zur Achse der Steckdose (1) in mindestens eine Richtung verschiebbar angeordnet ist, wobei innerhalb des Gehäuses (1a) ein Biegeriegelelement (11) mit einer Sperrklinke (12) vorgesehen ist, deren Sperrklinke (12) in ihrer Verriegelungsstellung in ein am Verschlußelement (7) angeordnetes Rasterelement (15) eingreift und in dieser Stellung durch eine Druckfeder (16) gehalten wird, wobei ein in die Steckdosenöffnung (1b) eingebrachter Adapter (17) mit einem senkrecht angeordneten Entriegelungsstift (19) vorgesehen ist, und wobei der Entriegelungsstift (19) die Verriegelungsstellung des Verschlußelementes (7) aufhebt und ermöglicht, daß bei Einführung eines Steckers in die Steckdosenöffnung (1b) die Stifte des Steckers zwei im Abstand der Stifte im Adapter (17) vorgesehene Bohrungen (20) durchdringen, eine seitliche Verschiebung des Verschlußelementes (7) bewirken und in die Steckerbuchsen (6) zwecks elektrischer Kontaktnahme eingreifen, **dadurch gekennzeichnet, daß** das Verschlußelement (7) aus einem länglichen Führungsteil (8) mit zwei längsseitlich angeordneten die Schrägflächen (10) aufweisenden Bauteilen (9) besteht, daß das längliche Führungsteil (8) in einer nutförmigen Ausnehmung des Gehäuseblocks (5) verschiebbar gelagert ist und eine Ausnehmung (15) zur Aufnahme der Sperrklinke (12) des Biegeriegelelementes (11) aufweist, daß das Biegeriegelelement (11) mittels eines Verbindungssteges (13) mit einer Haltevorrichtung (14) mechanisch fest verbunden ist, die in eine parallel zur Achse der Steckdose (1) verlaufende, im Gehäuseblock (5) angeordnete Nut einpaßbar ist, und daß bei. Anlage des Adapters (17) an der Stirnfläche (1c) der Steckdosenöffnung (1b) der Entriegelungsstift (19) mit seinem in das Steckdosengehäuse (1a) eingreifenden Ende eine Druckkraft auf den Verbindungssteg (13) des Biegeriegelelementes (11) derart ausübt, daß eine Verschiebung des Verbindungssteges (13) und der Sperrklinke (12) in Achsrichtung der Steckdose (1) sowie damit eine Entriegelung von Sperrklinke (12) und Rasterelement bzw. Ausnehmung (15) erfolgt.

2. Steckdose nach Anspruch 1, **gekennzeichnet durch** einen scheibenförmigen Adapter (17) mit einem senkrecht zu seiner Oberfläche (18) angeordneten Entriegelungsstift (19).

3. Steckdose nach Anspruch 1 oder 2, **dadurch gekennzeichnet, daß** nach Einführung des Adapters (17) in die Steckdosenöffnung (1b) der Entriegelungsstift (19) in das Steckdosengehäuse (1a) eingreift und zur Entriegelung der Sperrklinke (12) entgegen der Federkraft der Druckfeder (16) mit dem Biegeriegelelement (11) zusammenwirkt.

4. Steckdose nach einem der Ansprüche 1 bis 3, **dadurch gekennzeichnet, daß** das Verschlußelement (7) an seiner von den Steckerbuchsen (6) wegweisenden Oberfläche zwei im Abstand der Steckerbuchsen (6) angeordnete und in seine Verschieberichtung weisende Schrägflächen (10) aufweist, und daß die Stifte des Steckers auf die Schrägflächen (10) des Verschlußelementes (7) eine seine seitliche Verschiebung bewirkende Druckkraft ausüben.

5. Steckdose nach einem der Ansprüche 1 bis 4, **dadurch gekennzeichnet, daß** der scheibenförmige Adapter (17) in seiner Form der Stirnfläche (1c) der Steckdosenöffnung (1b) angepaßt ist und an dieser in seiner eingeschobenen Lage anliegt, wobei der Entriegelungsstift (19) eine in der Stirnfläche (1c) vorgesehene Bohrung durchdringt und in das Steckdosengehäuse (1a) eingreift.

## Claims

1. Electrical protection socket (1) with a safety device for use in aircraft for connecting electronic equipment by means of commercially available plugs and power cables, in particular portable electronic equipment such as laptops or Walkmans, wherein the socket (1) is secured preferably in the vicinity of a passenger seat, wherein a closure element (7) covering the openings of jacks (6) and preventing a direct insertion of pins of a plug is arranged within a housing (1a) of the socket (1), the closure element being displaceably arranged in at least one direction perpendicular to the axis of the socket (1), wherein a flexible locking element (11) with a catch (12) is provided within the housing (1a), the said catch (12) engaging in its locking position in a notched element (15) arranged on the closure element (7) and being maintained in this position by means of a compression spring (16), wherein an adapter (17) incorporated in the socket opening (1b) and with a perpendicularly arranged unlocking pin (19) is provided, and wherein the unlocking pin (19) releases the locking position of the closure element (7) so that, on inserting a plug into the socket opening (1b), the pins of the plug penetrate two holes (20) provided spaced apart from the pins in the adapter (17), effect a lateral displacement of the closure element (7) and engage in the jacks (6) for the purposes of electrical contact, **characterised in that** the closure element (7) consists of an oblong guide part (8) with two longitudinally and laterally arranged structural parts (9) having inclined surfaces (10), that the oblong guide part (8) is displaceably mounted in a groove-shaped recess of the housing block (5) and has a recess (15) for accommodating the catch (12) of the flexible locking element (11), that the flexible locking element (11) is mechanically rigidly connected by means of a connecting link (13) to a holding device (14) that can engage in a groove running parallel to the axis of the socket (1) and arranged in the housing block (5), and that when the adapter (17) rests against the front surface (1c) of the socket opening (1b) of the unlocking pin (19) with its end engaging in the socket housing (1a) it exerts a compressive force on the connecting link (13) of the flexible locking element (11) in such a way that a displacement of the connecting link (13) and of the catch (12) occurs in the axial direction of the socket (1) and in addition an unlocking of the catch (12) and notched element and recess (15) takes place.

2. Socket according to claim 1, **characterised by** a disc-shaped adapter (17) with an unlocking pin (19) arranged perpendicular to its surface (18).

3. Socket according to claim 1 or 2, **characterised in that** after inserting the adapter (17) into the socket opening (1b) the unlocking pin (19) engages in the socket housing (1a) and co-operates with the flexible locking element (11) in order to release the catch (12) from the spring force of the compression spring (16).

4. Socket according to one of claims 1 to 3, **characterised in that** the closure element (7) comprises on its surface pointing away from the jacks (6) two inclined surfaces (10) arranged spaced apart from the jacks (6) and pointing in its displacement direction, and that the pins of the plug exert on the inclined surfaces (10) of the closure element (7) a compressive force effecting its lateral displacement.

5. Socket according to one of claims 1 to 4, **characterised in that** the disc-shaped adapter (17) is adapted as regards its shape to the front surface (1c) of the socket opening (1b) and rests against this in its inserted position, whereby the unlocking pin (19) penetrates a hole provided in the front surface (1c) and engages in the socket housing (1a).

## Revendications

1. Prise de courant électrique (1) avec dispositif de sécurité pour avions pour raccorder des appareils électroniques équipés de prises et de câbles usuels dans le commerce, notamment des appareils électroniques transportables tels que des laptocs ou des walkmans, étant précisé que :
- la prise de courant (1) est fixée de préférence à proximité d'un siège de passager,
- à l'intérieur du boîtier (la) de la prise (1) se trouve un élément de fermeture (7) obturant les ouvertures des douilles enfichables (6) de manière à empêcher l'introduction directe des fiches d'une prise, cet élément de fermeture pouvant coulisser au moins dans un sens perpendiculairement à l'axe de la prise (1),
- à l'intérieur du boîtier (la) est prévu un élément de verrouillage souple (11) comportant un cliquet d'arrêt (12) qui, en position de verrouillage, est en prise dans un élément d'arrêt (15) monté sur un élément de fermeture (7), en étant maintenu dans cette position par un ressort de poussée (16),
- un adaptateur (17) monté dans l'ouverture (1b) de la prise comporte une fiche de déverrouillage (19), montée perpendiculaire à lui, qui met fin à la position de verrouillage de l'élément de fermeture (7) et permet que, lors de l'introduction d'un connecteur dans l'ouverture (1b) de la prise, que les fiches du connecteur traversent deux alésages (20) prévus dans l'adaptateur (17) avec l'espacement des fiches en produisant un coulissement latéral de l'élément de fermeture (7) pour venir s'engager dans les douilles enfichables (6) et ainsi établir le contact électrique, **caractérisée en ce que**
- l'élément de fermeture (7) est constitué d'une pièce de guidage (8) allongée avec deux parties (9) disposées le long des bords longitudinaux et présentant des portées obliques (10),
- la pièce de guidage (8) peut coulisser dans un évidement en forme de rainure du bloc de boîtier (5) et présente un évidement (15) pour accueillir le cliquet d'arrêt (12) de l'élément de verrouillage souple (11),
- l'élément de verrouillage souple est solidaire mécaniquement, par une barrette de liaison (13) d'un dispositif de maintien (14) qui peut être emboîtée dans une rainure, parallèle à l'axe de la prise (1), prévue dans le bloc de boîtier (5),
- quand l'adaptateur (17) peut s'appliquer sur la face frontale (1c) de l'ouverture (1b) de la prise, la fiche de déverrouillage (19), par son extrémité engagée dans le boîtier de prise (la), exerce une force de poussée sur la barrette de liaison (13) de l'élément de verrouillage souple (11), de sorte qu'il se produit un coulissement de la barrette de liaison (13) et du cliquet d'arrêt (12) selon la direction axiale de la prise (1), et donc un déverrouillage de ce cliquet (12) et de l'élément d'arrêt ou évidement (15).

2. Prise selon la revendication 1, **caractérisée en ce que** l'adaptateur (17) est en forme de disque et comporte une fiche de déverrouillage (19) perpendiculaire à sa surface (18).

3. Prise selon la revendication 1 ou 2, **caractérisée en ce que** après introduction de l'adaptateur (17) dans l'ouverture (1b) de la prise, la fiche de déverrouillage (19) est engagée dans le boîtier de prise (1a) et coopère avec l'élément de verrouillage souple (11) pour déverrouiller le cliquet d'arrêt (12) contre l'action du ressort de poussée (16).

4. Prise selon une des revendications 1 à 3, **caractérisée en ce que** l'élément de fermeture (7), sur sa face éloignée des douilles enfichables (6), présente deux portées obliques (10) disposées avec l'espacement des douilles enfichables (6) et dirigées selon la direction de coulissement, les fiches de la prise exerçant sur les portées obliques (10) de l'élément de fermeture (7) une force de poussée provoquant son coulissement latéral.

5. Prise selon une des revendications 1 à 4, **caractérisée en ce que** l'adaptateur (17) en forme de disque a sa forme adaptée à celle de la portée frontale (1c) de l'ouverture de prise (1b), et s'appuie sur celle-ci quand il est en position engagée, la fiche de déverrouillage (19) traversant un alésage prévu dans la face frontale (1c) pour venir s'engager dans le boîtier de prise (1a).
